Europäisches Patentamt

European Patent Office

Office européen des brevets

(11) Publication number: **0 371 943**
**A2**

# EUROPEAN PATENT APPLICATION

(21) Application number: 89850419.6

(22) Date of filing: 27.11.89

(51) Int. Cl.5: **G06F 9/45**

(30) Priority: 29.11.88 US 277552

(43) Date of publication of application:
06.06.90 Bulletin 90/23

(84) Designated Contracting States:
**DE FR GB**

(71) Applicant: **International Business Machines Corporation**
**Old Orchard Road**
**Armonk, N.Y. 10504(US)**

(72) Inventor: **Hidalgo, Domingo Segundo**
**2200 Rogge Lane**
**Austin Texas 78723(US)**

(74) Representative: **Johansson, Lars E. et al**
**IBM Svenska AB Intellectual Property**
**Department 4-01**
**S-163 92 Stockholm(SE)**

(54) **System and method for generating programming language translators.**

(57) A system for automating a portion of a process of writing programming language translators provides a plurality of standard objects written in some selected target language. This target language is the programming language which is used to write the programming language translator, and is independent of the input language which is to be translated using that translator being written. These standard objects include all those which are necessary for the lexical scanning and parsing portions of the translator, and include simplified abstract interface points for user written code to perform semantic analysis.

*Fig. 1*

## SYSTEM AND METHOD FOR GENERATING PROGRAMMING LANGUAGE TRANSLATORS

### BACKGROUND OF THE INVENTION

#### 1. Technical Field:

The present invention relates generally to translation of computer programming languages, and more specifically to a system and method for automating a portion of the process of writing translators for computer programming languages.

#### 2. Background Art:

Computer programming languages are used to describe sequences of operations to be performed by digital computers. Many different programming languages exist, and range from machine languages, which are interpreted directly by hardware, to high level languages which must be translated into an equivalent form prior to hardware execution.

"Translation" is a general term referring to the changing of the form of a program from one language to another. "Compiling" is synonymous with translation but is generally used with reference to the act of translating a high level language into machine language, which is directly executable on the hardware of a computer system, or into assembly language, which can be directly translated into machine language with relatively little effort.

The problem of programming language translation has received a great deal of study, and many theoretical and practical tools are available to assist the person who is writing a translator from one language to another. Among many others, two widely known references which describe the theory and practice of translating programming languages are "The Theory of Parsing, Translation and Compiling", A. Aho and J. Ullman, Prentice-Hall, Englewood Cliffs, New Jersey (1972) and "Principles of Compiler Design", A. Aho and J. Ullman, Addison-Wesley, Reading, Maryland (1977).

Writing a programming language translator is a complex, difficult process. A translator must perform several processes, each of which is a complex programming project when considered independently. These separate parts include, in broad terms, lexical analysis, syntactic analysis, and semantic analysis, which are related to analysis of the source program, and optimization and code generation, which are related to construction of an output file.

Some portions of the translation process lend themselves to certain degrees of automation. In particular, the lexical analysis and syntactic analysis steps of the translation process have been subjected to rigorous formal analysis. As a result, tools are available to automate, in large part, the creation of lexical scanners, which perform lexical analysis, and parsers, which perform syntactic analysis. An example of such tools are the programs lex and yacc which are available on Unix (TM) and related software systems.

Current tools, such as lex and yacc, leave much to be desired from the standpoint of automated writing of programming language translators. They generate program code to perform lexical scanning and syntax parsing, but are not integrated. It is the responsibility of the human translator writer to write code which takes the output of a lexical scanner generated by lex and convert it to input usable by a syntactical parser generated by yacc. The translator writer is completely responsible for incorporating all necessary semantic analysis as best he can.

The output of available programs such as lex and yacc also have the drawback that any changes made to the specification of the language to be translated are reflected at multiple points throughout the automatically generated code. The translator writer must, after running the new language specification through the tools a second time, change all the portions of the code he has written separately in order to match changes to the code generated by lex and yacc. Since these changes are complex and fairly numerous, it is difficult to ensure that no errors are introduced when such a change is made. It is also difficult to ensure that changes made in one portion, for example the lexical scanner, are properly reflected in other portions such as the parser.

It would be desirable to provide a system for automating a portion of the programming language translator writing process with simplified requirements for ensuring consistency between the various portions thereof. It would be further desirable if such a system simplified the task of interfacing the automatically generated portions of a translator with those which must be written by the human translator writer.

### SUMMARY OF THE INVENTION

The present invention is defined in the attached claims.

It is an object of the present invention to provide a system and method for automatically generating a portion of the source code for a programming language translator.

It is another object of the present invention to provide a system and method for automatically generating a portion of the source code for a translator while providing a simplified interface to user written portions of the translator.

It is further object of the present invention to provide such a system which allows for simplified maintenance in the case of specification changes to a language to be translated.

Therefore, in order to accomplish these and other objects and advantages as will become clear with relation to the detailed description set forth below, the present invention includes a plurality of standard objects written in some selected target language. This target language is the programming language which is used to write the programming language translator, and is independent of the input language which is to be translated using that translator being written. These standard objects include all those which are necessary for the lexical scanning and parsing portions of the translator, and include simplified interface points for user written code to perform semantic analysis.

BRIEF DESCRIPTION OF THE DRAWINGS

The novel features believed characteristic of the invention are set forth in the appended claims. The invention itself however, as well as a preferred mode of use and further objects and advantages thereof, will best be understood by reference to the following detailed description of an illustrative embodiment when read in conjunction with the accompanying drawings, wherein:

FIGURE 1 is a block diagram of a system for creating a translator for an input programming language;

FIGURE 2 is a flow chart illustrating the steps performed by the system of Figure 1;

FIGURE 3 is a block diagram of a data structure for use with a lexical scanner; and

FIGURE 4 is a block diagram of a data structure for use with a parser.

DETAILED DESCRIPTION OF THE PREFERRED EMBODIMENT

The description which follows refers to three different programming languages. These languages are: a meta-language, a target language, and an input language. The meta-language is a formalized description of the input language. The input language is the language for which the translator is being written. The target language is the language which is used to write the translator.

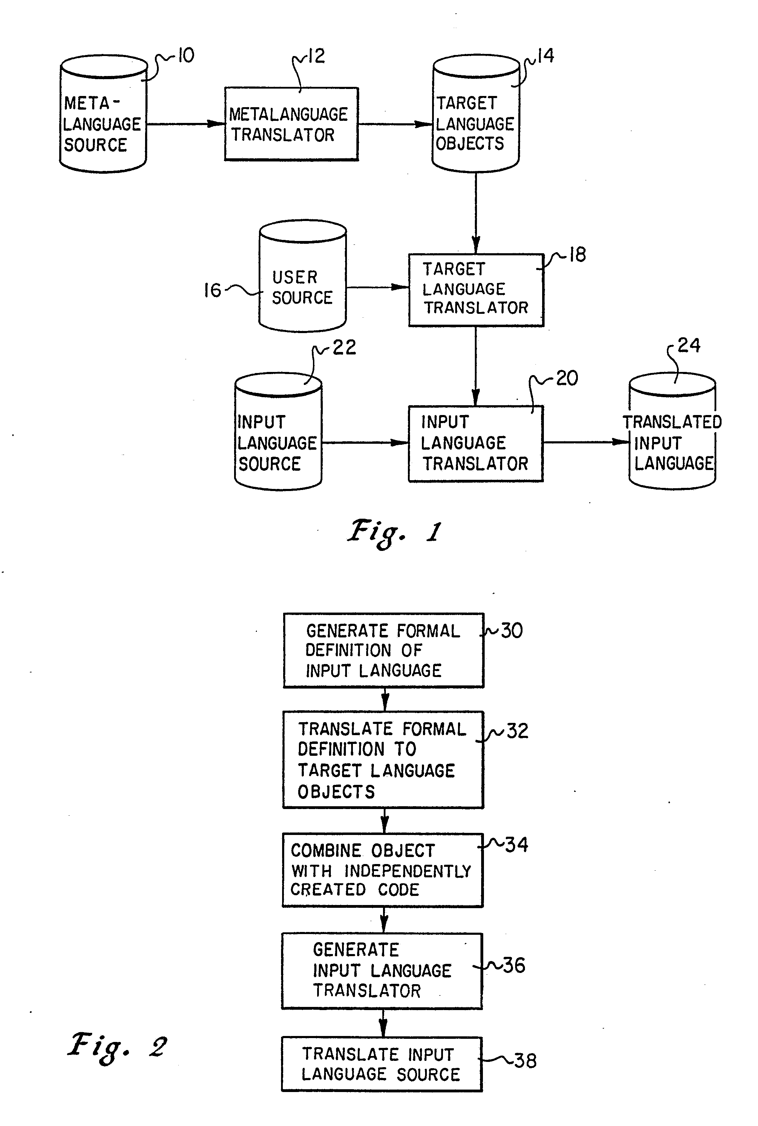

Referring to Figure 1, a meta-language source file 10 contains a formal specification of an input language. The specification is preferably in a standard format, such as Backus-Naur Format (BNF), which describes the vocabulary, lexical specification, and syntax of the input language. The statements in the meta-language source file 10 are read by a meta-language translator 12 and converted into a file 14 containing target language objects.

The meta-language translator 12 can be any program which is capable of converting the meta-language source file 10 into the target language objects 14 having the properties described below. For purposes of the present invention, the meta-language source file 10 and translator 12 can be dispensed with and the target language objects 14 maintained directly. However, use of the meta-language source file 10 generally allows the specification of the input language to be more clearly understood by the user, who is a person writing programming language translators.

The target language in which the objects 14 are written can be any language suitable for the writing of translators. Examples of such languages are C, Pascal, and Ada. The selection of the target language can be made independently of the identity of the input language, and will generally be chosen to be a language with which the user is familiar.

The target language objects 14 do not represent the entire translator. A user must provide one or more user source files 16 which contain semantic analysis and code generation portions of the translator. The user source 16 and the target language objects 14 are used as input to a target language translator 18, which generates an executable input language translator 20. This translator 20 reads a source program from an input language source file 22, and generates a translated input language file 24. The translated file 24 may be an executable file, or may be in any other form which can eventually be translated into an executable file. The form of the translated file 24 is dependent upon the code generation portion of the input language translator 20, which was defined by code in the user source file 16.

Figure 2 illustrates the sequence of steps performed by the system of Figure 1 in order to generate the translated input language file 24. First, the formal definition of the input language is generated (step 30) and placed in the meta-language source file 10. Next, the formal definition is translated (step 32) to the target language objects 14. The user source code 16, which has been created independently of the automatically generated target language objects, is combined therewith (step 34), and the input language transla tor is generated (step 36). The input language translator 20 is then used to translate the input language source (step 38).

The nature and function of the target language objects 14 provides for a high level of integration between the lexical analysis, syntactic analysis, and semantic analysis portions of the input language translator. Table I is a list of eleven standard objects used in the preferred implementation.

Table I

1) dictionary
2) alphabet definition
3) lexeme object
4) lexical rules list
5) lexical scanner object
6) grammatical goals
7) token group membership
8) semantic function list
9) syntax graph node
10) syntax graph
11) parser object

The first object is a dictionary. The dictionary contains the vocabulary, or reserved words, for the input language. The type of data structure in which the dictionary is stored is implementation dependent, and is preferably a hashing scheme with open addressing for purposes of performance.

The second object is an alphabet definition object. This is a data structure used to redefine the stream of characters making up the input language source file 22 to an internal alphabet used by the translator 20. The alphabet definition object is used to support user defined classes, which are groups of characters that can be treated as a single entity in the definition of lexeme objects. This object is typically used to translate all characters into either upper case or lower case, and to translate all whitespace characters, such as blank, tab, line feed, carriage return, and so forth to a single whitespace character, typically an ASCII "blank" character. The alphabet definition object can be efficiently implemented as a one dimensional array of characters, with the ASCII value of each character read from the input file 22 used to index into the array, and with the character at each location in the array being the translated value of the character.

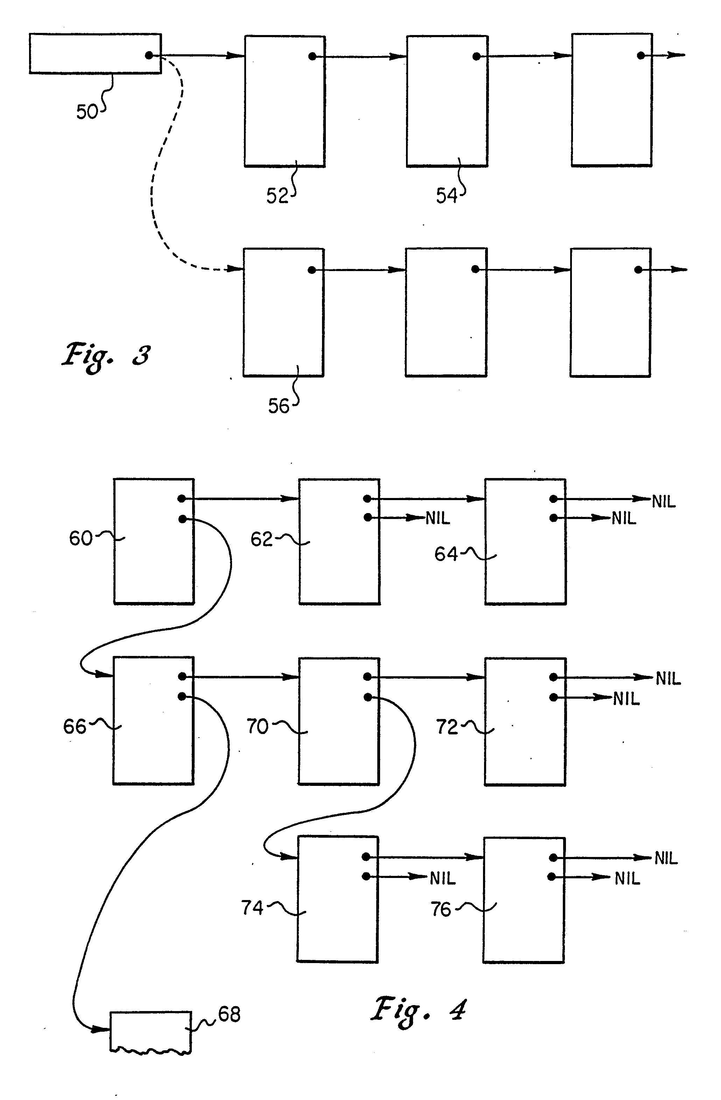

The lexeme object defines a lexical rule used for tokenizing the input language. The lexeme object and object number 4, the lexical rules list, are discussed in further detail in connection with Figure 3.

The fifth object in Table I is the lexical scanner object, which identifies all of the necessary data structures which the lexical scanner requires. In the preferred embodiment set forth in Table I, this is a simple structure (in C), or a record (in Pascal), which contains links (such as pointers) to items 1-4.

Items 6-11 are used in the syntactic analysis of the input language source file 22. In general, the parser functions by traversing a graph representing allowable syntactic structures. The grammatical goals object, number six in Table I, contains pointers to certain nodes within the syntax graph. These pointers point to the first node used to define selected syntactic structures, such as programs, subroutines, and statements. The object itself can be implemented as a array of pointers.

The seventh object in Table I, token group membership, is used by the parser to determine whether a particular token is one of a predefined group of tokens. This can be implemented in several ways, and preferably consists of a group of functions which return a boolean value indicating whether a given token is in a particular group. Alternatively, any other technique for determining set membership could be used.

Object eight, the semantic function list, is a list of pointers to semantic functions which are supplied by the user in his independently written source files 16. The pointers to these procedures can efficiently be stored in an array, and an index into the array used to indicate which semantic function is to be used. As will be described further in connection with Figure 4 and Table 3, the parser can make calls to any user-supplied procedure which is referenced in this array.

The ninth object, the syntax graph node, is the template for every node of the syntax graph, which is object ten. The parser functions by traversing this graph as will be described in connection with Figure 4.

The final object is the parser object, which is simply a base location which identifies the rest of the necessary data structures. Thus, the parser object contains links to each of elements 5, 6, 7, 8 and 10.

The objects listed in Table I are supplied as already initialized data structures. For example, the syntax graph is completely constructed based upon the BNF-like productions given in the metalanguage source file 10. It will be appreciated that the objects listed in Table I have a standard form, and their form need not be changed to conform with particular requirements of the input language. That is, if a single target language is used to write several different input language translators, the format of the standard objects 14 remains the same. Only the actual data values placed into the objects, such as the dictionary, token group membership, and syntax graph, are changed.

Several of the objects set forth in Table I will now be described in more detail. Table II shows the information contained in each lexeme object. The set of initial characters is simply the set of characters which are allowed to be the first character of a string of characters that represents a lexical token. The set of characters in the body is likewise a set of allowable characters, and the set of terminal characters is that subset of characters which are allowed to be the terminal character in the lexical token. When the scanner reads a next character to be a separator, such as a whitespace character, the current character must be an element of the set of terminal characters in order for the current lexical object to be valid. If the set of terminal characters is the empty set, then the whitespace character is interpreted as the end of the lexical token.

Table II

1) set of initial characters
2) set of characters in body
3) set of terminal characters
4) pointer to next lexeme
5) maximum number of characters allowed
6) character output file flag
7) character buffering flag
8) terminator inclusion rule

Each lexeme defines a rule for scanning one type of lexical object. Many different lexical objects of each type are typically scanned during the processing of a single program. Lexeme types include, for example, identifiers, numbers, operators, strings, and comments.

The pointer to the next lexeme, item four as shown in Table II, is used to link a list of lexemes together. Figure 3 illustrates the structure of the lexical rules list thus formed. The lexical rules list itself (object four from Table I) is simply a pointer 50 to the first lexeme 52, which in turn points to the following lexeme 54. This linked list structure allows for easy context switching during lexical scanning. If it is desired to be able to translate an input file containing two different input languages, separate linked lists for both sets of lexical rules can be maintained. Switching context requires only that the lexical rules list pointer 50 be changed to point to the first lexeme 56 in the second list of rules.

Item five in Table II indicates the maximum number of characters allowed in a token, if a limit exists. Item six is a boolean flag used to indicate whether input characters are copied to an output file as they are read. Copying characters to an output file is used to generate an output listing of a compilation. Item seven is a boolean flag which indicates whether a token is to be temporarily stored in a buffer after it is generated. Tokens which will be used by the parser are so stored, while tokens which are not used by the parser, such as comments, are discarded.

Item eight indicates the type of rule used to include terminal characters in the body of the string representing the token. This is useful in, for example, scanning strings. In C, strings are delineated by quotes, and the backslash symbol is used as an escape character to include a quote as a character in the string. The backslash tells the scanner that the following quote is not the terminator for this token. In Pascal, inclusion of the single quote in a string is accomplished by repeating the symbol in two successive characters. These two examples illustrate the two possible values for the terminator inclusion rule item: double-operator (as in Pascal), and special-operator (as in C).

Lexical scanning is performed by matching the first character of a new lexical object with the initial characters of each lexeme in the list until a match is found. Following characters are then scanned and matched against the set of body characters until a separator, or a character that is an element of the set of terminal characters of this set is not empty, is reached, at which point the last character in the lexical object is compared with the terminal characters set. If the lexical object is valid, a token corresponding to the lexeme type is generated. This is all that is necessary for syntax checking. The user may, however, wish to add sub routine calls at this point to uniquely identify the tokens and insert them into a symbol table in order to assist in the code generation portion of the translator.

Table III shows the information contained in each syntax graph node (object nine in Table I). The node type element describes the type of node, while the node value element gives an associated value. In a preferred embodiment, there are four node types: semantic, wherein the associated node value is an index into the semantic function list object (object eight in Table I); reserved word, wherein the associated value is an index into the dictionary object (object one in Table I); lexeme name, wherein the associated value is type of a lexical token, which is itself a terminal element in a syntactic grammar; and nonterminal, wherein the associated value is an index into the grammatical goals object (object six in Table I), which in turn gives an entry point into the syntax graph.

Table III

1) node type
2) node value
3) pointer to next node
4) pointer to alternate node

Objects 3 and 4 of Table III are pointers. The pointer to the next node is followed when the current token matches that expected for this node. The pointer to the alternate node is followed when the current token does not match that shown in this node.

Figure 4 illustrates how syntax graph nodes are used to construct the syntax graph. Figure 4 is only a small part of a simple syntax graph. Each object 60-76 of Figure 4 represents one syntax graph node (object nine on Table I). Each node contains two pointers which correspond to items 3 and 4 in Table III. The upper pointer in each object is the pointer to the next node, and the lower pointer is the pointer to the alternate node. Pointers to NIL indicate that no next link exists.

The syntax graph is traversed by checking the type of the graph node. If the node type is reserved word or lexeme name, a lexical token is read and compared it to the expected value for that node. The process of comparing a token with a node in the syntax graph varies depending upon the syntax node type. If the node type is reserved word, the token must be the precise reserved work indicated in the value field for there to be a match. If the node type is lexeme name, the token must be a lexeme of the type shown in the value field.

If the node type is semantic, the function associated with that node is invoked, and a result returned which indicates whether parsing may proceed or stop. The semantic functions also perform non-syntactic work, such as placement of tokens in, and comparison to, a symbol table, assignment to and comparison of variable types, and other semantic analysis and code generation functions.

If the node type is nonterminal, the current location in the graph is pushed onto a stack and a jump made to the location in the graph indicated in the associated value field. This jump represents a subgoal. When the subgoal is completed, indicated by reaching NIL in some next node pointer field, the current location is popped from the stack and the next node pointer followed to continue processing. Subgoals may themselves generate additional subgoals recursively. Each jump to a subgoal places a location on the stack, with that location being popped from the stack upon return. If a program has no syntax errors, the stack will empty when the last token is read.

In Figure 4, assuming the current node in the syntax graph is node 60, the first token is compared to the node type and value of node 60. If the token matches, the syntax graph is followed to node 62, and a second token is matched with node 62. If a match is found there, the graph is followed to node 64, and a next node matched therewith. The next node pointer from node 64 points to NIL, indicating that a successful match at this node completes this particular traverse of the graph. The alternate node pointers for nodes 62 and 64 both point to NIL, indicating that no alternates exist. If the appropriate token does not match either node 62 or 64, the lack of an alternate node indicates that a syntax error has occurred.

Node 60 has an alternate node pointer to node 66. Therefore, if the first token does not match node 60, it is compared to node 66. If it does not match node 66, the alternate node pointer is followed to node 68 in order to perform a comparison, and the process continues throughout the graph. If the first token does match node 66, the next token is compared to node 70, followed by comparison of a third token with node 72 if the next node matches node 70, as described above. If the second token does not match node 70, an alternate node pointer indicates that it should be matched with node 74. A successful match with node 74 causes the third token to be compared with node 76.

The system described above provides a set of standard objects which are manipulated in a known manner regardless of the input language for which a translator is being written. Lexical scanning and parsing are therefore performed on an input language program without the necessity for any specific knowledge about the input language. All of the language specific information is embodied in the values stored in the standard objects. Thus, for example, the syntax of the input language is completely defined by the interconnections between, and data stored in, the nodes of the initialized syntax graph. Substituting one syntax graph for another defines a new input language without affecting the parsing routines; only the data is changed.

## Claims

1. A method of generating a translator for an input language, comprising the steps of:

(a) generating an input language specification;

(b) translating the input language specification into a set of objects in a target language;

(c) combining the objects of step (b) with independently created code in the target language; and

(d) translating code resulting from step (c) into executable form to generate an input language translator.

2. The method of Claim 1, wherein the input language specification includes a lexical and a syntactic definition thereof.

3. The method of Claim 2, wherein the independently created code performs semantic analysis of the input language.

4. The method of Claim 3, wherein the independently created code also performs code generation of the translated input language.

5. The method of Claim 1, further comprising the steps of:

(e) supplying input in the input language to the input language translator; and

(f) translating the supplied input into executable code.

6. The method of Claim 1, wherein the objects created in step (b) comprise a plurality of standard data structures and procedures which embody lexical and syntactic descriptions of the input language.

7. A system for generating programming language translators, comprising:
a first source file containing a lexical and syntactical specification of an input language;
a first translator for translating said source file into a plurality of objects in a target language, wherein the objects define the lexical and syntactic structure of the input language;
a second source file containing target language program code; and
a second translator for translating the target language program code and the target language objects into a single executable file, wherein the executable file is a translator for the input language.

8. The system of Claim 7, wherein the target language program code defines controls for semantic analysis and code generation portions of the input language translator.

9. The system of Claim 7, wherein the input language specification comprises a grammar defining lexical and syntactic features of the input language.

10. A method for generating a translator for an input language, comprising the steps of:

(a) providing a plurality of initialized data structures in a target language, wherein data contained in such data structures defines lexical and syntactic rules for the input language;

(b) providing independently created programming code in the target language for performing semantic analysis of the input language, and code generation for a translated version of the input language; and

(c) translating the target language code provided in steps (a) and (b) into executable computer code, wherein the executable code is the translator for the input language.

11. The method of Claim 10, wherein the syntactic rules for the input language are defined in a graph having a plurality of nodes, wherein syntax is checked by traversing the graph and comparing lexical tokens with expected tokens at each node.

12. The method of Claim 11, wherein each graph node has type and an associated value, wherein possible types include keyword, lexeme, semantic, and nonterminal, and wherein the values associated with each such type include identifier of a particular keyword, identifier of lexeme type, identifier of a semantic function, and an indicator of a location within the graph, respectively.

```
         ~10                      ~12                        ~14
  ┌─────────────┐          ┌──────────────┐          ┌─────────────┐
  │   META-     │          │ METALANGUAGE │          │   TARGET    │
  │  LANGUAGE   │─────────▶│  TRANSLATOR  │─────────▶│  LANGUAGE   │
  │   SOURCE    │          │              │          │   OBJECTS   │
  └─────────────┘          └──────────────┘          └─────────────┘


             ┌─────────────┐         ┌──────────────┐  ~18
             │    USER     │         │   TARGET     │
       16~   │   SOURCE    │────────▶│  LANGUAGE    │
             │             │         │  TRANSLATOR  │
             └─────────────┘         └──────────────┘

       ~22                        ~20
  ┌─────────────┐          ┌──────────────┐          ~24
  │   INPUT     │          │    INPUT     │     ┌─────────────┐
  │  LANGUAGE   │─────────▶│   LANGUAGE   │────▶│ TRANSLATED  │
  │   SOURCE    │          │  TRANSLATOR  │     │   INPUT     │
  │             │          │              │     │  LANGUAGE   │
  └─────────────┘          └──────────────┘     └─────────────┘
```

*Fig. 1*

```
  ┌────────────────────┐
  │ GENERATE FORMAL    │ ~30
  │ DEFINITION OF      │
  │ INPUT LANGUAGE     │
  └────────────────────┘
            │
            ▼
  ┌────────────────────┐
  │ TRANSLATE FORMAL   │ ~32
  │ DEFINITION TO      │
  │ TARGET LANGUAGE    │
  │ OBJECTS            │
  └────────────────────┘
            │
            ▼
  ┌────────────────────┐
  │ COMBINE OBJECT     │ ~34
  │ WITH INDEPENDENTLY │
  │ CREATED CODE       │
  └────────────────────┘
            │
            ▼
  ┌────────────────────┐
  │ GENERATE           │ ~36
  │ INPUT LANGUAGE     │
  │ TRANSLATOR         │
  └────────────────────┘
            │
            ▼
  ┌────────────────────┐
  │ TRANSLATE INPUT    │ ~38
  │ LANGUAGE SOURCE    │
  └────────────────────┘
```

*Fig. 2*

Fig. 3

50

52

54

56

60

62

64

66

70

72

74

76

68

NIL

NIL

NIL

NIL

NIL

NIL

Fig. 4